# EUROPÄISCHE PATENTSCHRIFT

(11) **EP 2 574 180 B1**
(45) Veröffentlichungstag und Bekanntmachung des Hinweises auf die Patenterteilung: **24.08.2016**
(21) Anmeldenummer: 11711838.0
(22) Anmeldetag: 25.03.2011
(51) Int. Cl.: B60P 1/02

(54) **TRANSPORTMITTEL MIT HUBBODEN UND SCHUBELEMENT**
TRANSPORT MEANS WITH A LIFTING PLATFORM AND PUSHING ELEMENT
MOYEN DE TRANSPORT POURVU D'UNE PLATEFORME DE LEVAGE ET D'UN ÉLÉMENT DE POUSSÉE

(30) Priorität: 25.03.2010 DE 102010003288
(43) Veröffentlichungstag der Anmeldung: 03.04.2013
(73) Patentinhaber: Hurler, Walter, 86391 Stadtbergen (DE)
(72) Erfinder: Hurler, Walter, 86391 Stadtbergen (DE)
(74) Vertreter: Raunecker, Klaus Peter
(86) Internationale Anmeldenummer: PCT/EP2011/054602
(87) Internationale Veröffentlichungsnummer: WO 2011/117379

(56) Entgegenhaltungen:
- EP-A1- 0 715 986
- EP-A1- 0 818 351
- EP-A1- 1 361 110
- WO-A2-2008/102257
- US-A- 4 083 429
- US-A1- 2005 226 706
- US-A1- 2008 044 248

## Beschreibung

Die vorliegende Erfindung betrifft ein fahrbares Transportmittel mit wenigstens einer horizontalen Ladefläche, einem die Ladefläche unterstützenden Rahmen und wenigstens einem Hubboden, der zwischen einer ersten Position, in welcher eine Oberseite des Hubbodens und die Ladefläche im Wesentlichen in einer Ebene angeordnet sind und wenigstens einer zweiten Position, in welcher der Hubboden gegenüber der Ladefläche abgesenkt ist, bewegbar ist.

Hubladebühnen zum Be- und Entladen von Nutzfahrzeugen sind aus der DE 195 21 437 A1 und EP0715986 sowie EP0818351 bekannt. Die Hubladebühne weist zwei Hubsäulen auf, die mit einer Ladeplattform verbunden sind und diese auf- und abbewegen, also vertikal verfahren. Zum Beladen eines Nutzfahrzeuges wird die Ladeplattform von den Hubsäulen abgesenkt. Im abgesenkten Zustand der Ladeplattform kann diese mit Ladegut beladen werden. Anschließend wird die Ladeplattform mit dem darauf abgestellten Ladegut angehoben. Das auf der Ladeplattform abgestellte Ladegut muss nun auf eine Ladefläche des Nutzfahrzeuges überführt werden, was sich insbesondere bei schweren Gütern wie gefüllten Containern oder beladenen Paletten als schwierig und manchmal sogar als gefährlich erweist. Zu diesem Zweck sind unterschiedlichste Vorrichtungen bekannt, die unter anderem Seile, Ketten, Gerüste sowie hydraulische Zylinder umfassen und das Ladegut meist durch Schwenkbewegungen von der Ladeplattform zu einem gewünschten Absetzpunkt auf der Ladefläche befördern. Beim Entladen des Nutfahrzeugs wird umgekehrt verfahren.

Es ist die Aufgabe der vorliegenden Erfindung, ein fahrbares Transportmittel zu schaffen, das im Gegensatz zu bekannten fahrbaren Transportmitteln ein einfacheres und bequemeres Be- und Entladen erlaubt. Diese Aufgabe wird durch das fahrbare Transportmittel mit den Merkmalen des Anspruchs 1 gelöst. Bevorzugte Ausführungsformen sind Gegenstand der abhängigen Ansprüche.

Gemäß der vorliegenden Erfindung wird ein fahrbares Transportmittel mit wenigstens einer horizontalen Ladefläche, einem die Ladefläche unterstützenden Rahmen und wenigstens einem Hubboden zur Verfügung gestellt, der zwischen einer ersten Position, in welcher eine Oberseite des Hubbodens und die Ladefläche im Wesentlichen in einer Ebene angeordnet sind und wenigstens einer zweiten Position, in welcher der Hubboden gegenüber der Ladefläche abgesenkt ist, bewegbar ist, wobei der Hubboden ein die Oberseite des Hubbodens bildendes Schubelement umfasst, das in der ersten Position des Hubbodens parallel zur Ladefläche zwischen einer ersten Stellung, in welcher das Schubelement einen Teil des Rahmens überdeckt und einer zweiten Stellung, in welcher das Schubelement den in der ersten Stellung überdeckten Teil des Rahmens freigibt, verschiebbar ist.

Beim erfindungsgemäßen Transportmittel kann der Hubboden dann, wenn sich das Schubelement in der zweiten Stellung befindet, zwischen der ersten und der zweiten Position bewegt werden, da der Rahmen vom Schubelement anders als in der ersten Stellung nicht mehr teilweise überdeckt wird, während die teilweise Überdeckung des Rahmes in der ersten Stellung des Schubelements ein Absenken des Hubbodens behindert. Befindet sich der Hubboden in der zweiten Position, so kann dieser mit Ladegut beladen werden. Durch anschließendes Bewegen des Hubbodens in die erste Position und Verschieben des Schubelements in die erste Stellung wird das auf dem Hubboden abgestellte Ladegut automatisch ins Innere des Transportmittels befördert, ohne dass es dazu irgendwelcher zusätzlicher Einrichtungen bedarf. Insbesondere kann das Ladegut vom Hubboden zu einem endgültigen Absetzpunkt auf der Ladefläche gebracht werden, ohne umständliche Schwenkbewegungen ausführen zu müssen. Ein Entladen des Transportmittels ist in umgekehrter Reihenfolge des beschriebenen Beladevorganges möglich. Somit ist das Be- und Entladen des erfindungsgemäßen Transportmittels einfacher und bequemer als das Be- und Entladen bekannter Transportmittel. Weil darüber hinaus auf zusätzliche Einrichtungen verzichtet werden kann, ist das erfindungsgemäße Transportmittel billiger sowie schneller und einfacher montierbar als bekannte Transportmittel. Vor allem aber resultiert aus dem Verzicht auf besagte Einrichtungen eine Reduktion des Gesamtgewichts des Transportmittels, so dass der Transport von Gütern mit einem erfindungsgemäßen Transportmittel leichter ist. Darüber hinaus ergibt sich bei motorbetriebenen Transportmitteln durch deren geringeres Gewicht eine Kraftstoffersparnis, die sich kostengünstig und umweltschonend auf den Betrieb des Transportmittels auswirkt.

Bei dem Schubelement handelt es sich im einfachsten Fall um ein flächiges oder plattenförmiges Element bzw. Bodenelement. Zum Bewegen des Hubbodens können verschiedenste Hubvorrichtungen wie zum Beispiel Hubsäulen vorgesehen sein.

Bei einer bevorzugten Ausführungsform der Erfindung weist der Hubboden wenigstens ein nutförmiges Hohlprofil auf und das Schubelement greift in das Hohlprofil ein. Infolge des Eingriffs in das Hohlprofil wird das Schubelement beim Verschieben durch das Hohlprofil geführt. Das Hohlprofil kann beispielsweise unterhalb oder seitlich des Schubelements vorgesehen sein. Handelt es sich bei dem Schubelement um ein plattenförmiges Element, so kann dieses mit seitlichen Endabschnitten in jeweilige beidseitig des Schubelements vorgesehene Hohlprofile eingreifen. Ist das Hohlprofil unterhalb des Schubelements vorgesehen, so kann das Schubelement ein oder mehrere Rollenelemente aufweisen, die in das Hohlprofil eingreifen und innerhalb des Hohlprofils abrollen. Eine weitere Ausführungsform der Erfindung umfasst unterhalb des Schubelements wenigstens eine Schiene, auf der sich das Schubelement beim Verschieben bewegt. Auch in diesem Fall kann das Schubelement wenigstens ein Rollenelement aufweisen, das nun jedoch auf der Schiene abrollt. Besonders bevorzugt ist dabei eine Ausführungsform, bei der das Schubelement wenigstens ein Rollenelement umfasst und das Hohlprofil oder die Schiene wenigstens eine Mulde aufweist, die das Rollenelement aufnimmt, wenn sich das Schubelement in der ersten und/oder der zweiten Stellung befindet. Derartige Mulden markieren leicht erkennbare Haltepositionen des Schubelements und helfen bei der Positionierung des Schubelements in der ersten und der zweiten Stellung.

Bevorzugt umfasst der Hubboden ein das Schubelement unterstützendes flächiges Grundelement. Dieses Grundelement hat vorteilhafterweise quer zur Verschiebungsrichtung dieselbe Breite wie das Schubelement. Sofern Hohlprofile oder Schienen unterhalb des Schubelements vorgesehen sind, können diese an oder in dem Grundelement angeordnet sein.

Das Schubelement kann vom Hubboden abnehmbar ausgeführt sein. Insbesondere dann, wenn der Hubboden ein flächiges Grundelement aufweist, ergeben sich dadurch flexiblere Einsatzmöglichkeiten des Transportmittels, wenn nämlich zu be- oder entladendes Transportgut den Einsatz eines Schubelements nicht unbedingt erfordert. In einem solchen Fall kann der Hubboden vorteilhafterweise in eine dritte Position gebracht werden, in welcher nunmehr eine Oberfläche des flächigen Grundelements und die Ladefläche im Wesentlichen in einer Ebene angeordnet sind. Sofern das Grundelement Hohlprofile aufweist, können zu deren Abdeckung Formprofile in die Hohlprofile eingesetzt oder auf die Hohlprofile aufgesetzt werden, um Unebenheiten auf der Oberseite des Grundelements auszugleichen.

Bei einer weiteren bevorzugten Ausführungsform weist das fahrbare Transportmittel eine erste Kupplungseinrichtung zum lösbaren Halten des Schubelements in der ersten Stellung und/oder eine zweite Kupplungseinrichtung zum lösbaren Halten des Schubelements in der zweiten Stellung auf. Mittels derartiger Kupplungseinrichtungen kann das Schubelement in der ersten und/oder der zweiten Stellung sicher gehalten werden und ein unbeabsichtigtes Verschieben des Schubelements aus diesen Stellungen wird erfolgreich unterbunden.

Grundsätzlich kann das Schubelement manuell oder mittels geeigneter Einrichtungen verschoben werden. Dementsprechend kann das Transportmittel eine Verschiebeeinrichtung zum Verschieben des Schubelements aufweisen, wobei das Schubelement ein Halteelement aufweist, an welchem die Verschiebeeinrichtung beim Verschieben des Schubelements angreift. Beispielsweise kann es sich bei dem Halteelement um einen Haken oder einen Vorsprung handeln, an dem die Verschiebeeinrichtung mittels eines entsprechenden Hakens einhakt. Bei anderen Ausführungsformen sind zwischen Halteelement und Verschiebeeinrichtung Rastverbindungen vorgesehen. Ferner können das Schubelement und die Verschiebeeinrichtung miteinander verschraubbar oder klammerbar sein. Ganz besonders bevorzugt ist das Halteelement als Bolzen ausgeführt und für die Verschiebeeinrichtung ist eine Greifeinrichtung bzw. ein Fangmaul vorgesehen, welches den Bolzen umgreifen kann. Die Verschiebeeinrichtung kann unter anderem einen hydraulischen oder pneumatischen Zylinder aufweisen, der über einen ein- und ausfahrbaren Stempel verfügt, wobei ein Ende des Stempels entsprechend ausgestaltet ist, um an dem Halteelement anzugreifen. Durch Ein- und Ausfahren des Stempels wird bei einer derartigen Ausführung die Verschiebung des Schubelements bewirkt. Andere Ausführungsformen weisen ein elektromotorisch bewegbares Stangenelement auf.

Bei bekannten Transportmitteln ragt der Hubboden zumindest in einer Betriebsstellung für gewöhnlich in einen Verkehrsraum hinein und stellt dadurch eine oft nicht ohne weiteres wahrzunehmende Gefahrenquelle dar. Aus Sicherheitsaspekten ist daher bevorzugt ein Außenrand des Hubbodens mit einem äußeren Rand der Ladefläche bündig, wenn sich das Schubelement in der ersten Stellung befindet. Da bei dieser Ausführungsform des erfindungsgemäßen Transportmittels der Hubboden nicht über die Ladefläche hinaus kragt, stellt der Hubboden keine potenzielle Gefahrenquelle mehr da. Befindet sich die Ladefläche unterhalb eines Verdecks, so ist der Hubboden in der ersten Position zudem vor Witterungseinflüssen und vor fremdem Zugriff geschützt.

Besonders bevorzugt ist der Hubboden an einer Seite des Transportmittels angeordnet, wobei ein weiterer Hubboden an einer entgegengesetzten Seite des Transportmittels vorgesehen ist. Dies erlaubt ein beidseitiges Be- und Entladen der Ladefläche des Transportmittels.

Grundsätzlich kann es sich bei dem fahrbaren Transportmittel um ein beliebiges Transportmittel handeln, wie zum Beispiel um ein Kraftfahrzeug oder einen Lastkraftwagen oder einen Anhänger oder ein Schienenfahrzeug oder einen Waggon.

Die Erfindung wird nachfolgend anhand eines bevorzugten Ausführungsbeispiels unter Zuhilfenahme von Zeichnungen näher erläutert.

Dabei zeigen:
- Figur 1: ein erfindungsgemäßes Transportmittel in der Seitenansicht und in der Draufsicht;
- Figur 2: einen Querschnitt durch das Transportmittel der Figur 1;
- Figur 3: einen Querschnitt durch einen Hubboden;
- Figur 4: einen vergrößerten Detailausschnitt aus der Figur 3;
- Figur 5: eine Verschiebeeinrichtung zum Verschieben eines Schubbodens;
- Figur 6: die Verschiebeeinrichtung der Figur 5 in vergrößerter Darstellung;
- Figur 7: einen Greifvorgang der Verschiebeeinrichtung aus den Figuren 5 und 6;
- Figur 8: einen Lösevorgang der Verschiebeeinrichtung aus den Figuren 5 und 6.

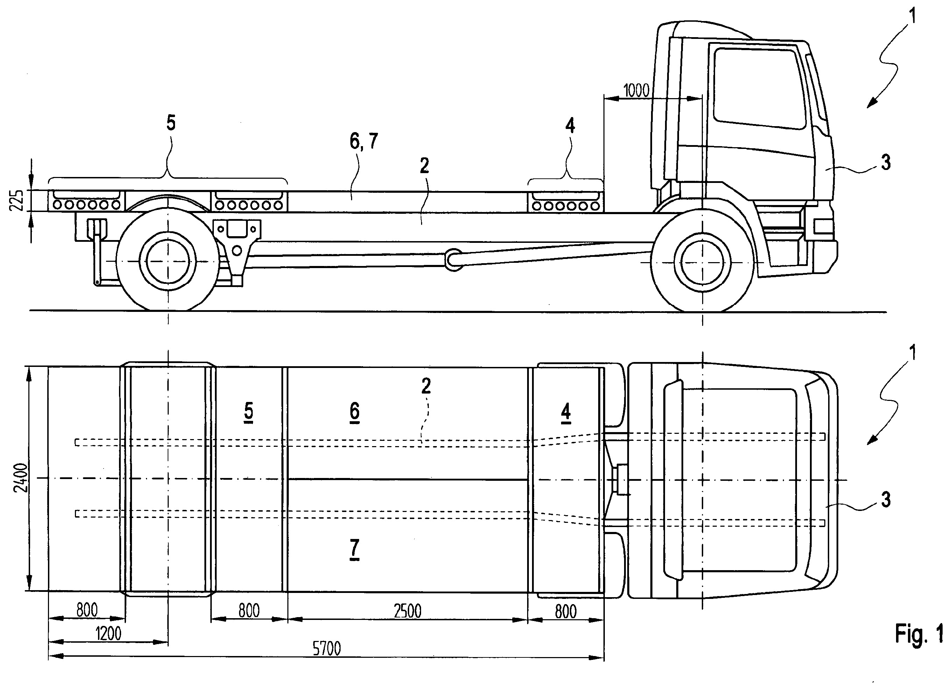

Ein erfindungsgemäßes fahrbares Transportmittel, bei dem es sich um einen Lastkraftwagen 1 handelt, ist in der Figur 1 einmal in der Seitenansicht und einmal in der Draufsicht zu sehen, wobei Bemaßungen in der Figur 1 sowie den anderen Figuren jeweils in mm sind. Der Lastkraftwagen 1 umfasst einen Rahmen 2 sowie an einem vorderen Endabschnitt des Rahmens 2 ein Führerhaus 3. An das Führerhaus 3 schließt sich heckseitig ein auf dem Rahmen 2 gelagertes Bodenmodul an, dessen Oberseite eine horizontale Ladefläche 4 bildet. Weitere Bodenmodule sind an einem hinteren Endabschnitt des Rahmens 2 auf demselben gelagert. Oberseiten dieser Bodenmodule bilden dabei eine weitere horizontale Ladefläche 5. Da die Bodenmodule auf dem Rahmen 2 gelagert sind, sind die Ladeflächen 4 und 5 vom Rahmen 2 unterstützt. Zwischen den Ladeflächen 4 und 5 ist an der in Fahrtrichtung des Lastkraftwagens 1 aus gesehen linken Seite ein mit jeweiligen linken äußeren Rändern der Ladeflächen 4 und 5 bündiger Hubboden 6 angeordnet. Entsprechend ist an der in Fahrtrichtung des Lastkraftwagens 1 aus gesehen rechten Seite ein mit jeweiligen rechten äußeren Rändern der Ladeflächen 4 und 5 bündiger Hubboden 7 zwischen den Ladeflächen 4 und 5 angeordnet. Mittels einer aus Übersichtlichkeitsgründen nicht gezeigten Hubeinrichtung sind die Hubböden 6 und 7 jeweils vertikal bewegbar. Dabei nehmen die Hubböden 6 und 7 in einem Ruhezustand jeweilige erste Positionen ein, in denen jeweilige Oberseiten der Hubböden 6 und 7 mit den Ladeflächen 4 und 5 im Wesentlichen in einer Ebene angeordnet sind. Zum Beladen der Ladeflächen 4 oder 5 werden die Hubböden einzeln oder je nach Bedarf auch gemeinsam gegenüber den Ladeflächen 4 und 5 abgesenkt, was auch synchron erfolgen kann. Dieses Absenken kann bis zu einer jeweiligen zweiten Position der Hubböden 6 und 7 erfolgen, in welcher ein jeweiliger Hubboden 6 oder 7 auf dem Untergrund oder dem Boden, auf dem der Lastkraftwagen 1 steht, aufsitzt oder mit diesem in Kontakt kommt. Darüber hinaus ist es den Hubböden 6 und 7 auch möglich, zwischen der ersten Position und der zweiten Position befindliche Zwischenpositionen oder eine gegenüber der zweiten Position noch weiter abgesenkte Position einzunehmen, sofern dies die Bodenbeschaffenheit erlaubt bzw. sofern eine entsprechende Vertiefung im Boden oder Untergrund vorhanden ist.

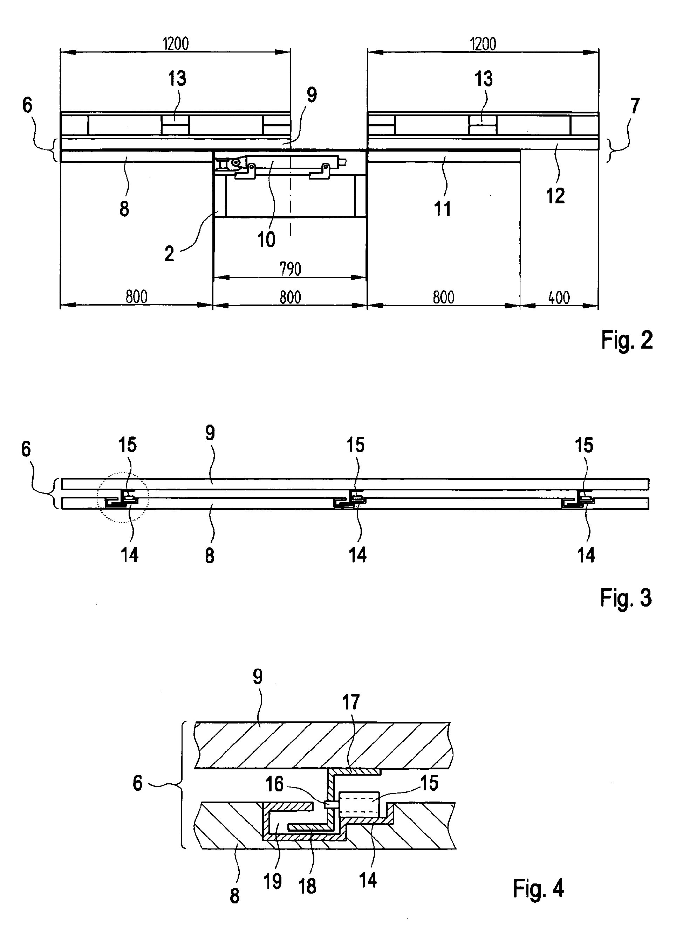

Einen Querschnitt durch den in der Figur 1 gezeigten Lastkraftwagen 1 auf der Höhe der Hubböden 6 und 7 stellt die Figur 2 dar. Beide Hubböden 6 und 7 befinden sich in der Figur 2 in der ersten Position, in welcher deren Oberseiten mit den Ladeflächen 4 und 5 im Wesentlichen in einer Ebene angeordnet sind. Aus der Figur 2 geht hervor, dass der linke Hubboden 6 ein flächiges Grundelement 8 der Breite 800 mm und ein ebenfalls flächiges Schubelement 9 der Breite 1200 mm umfasst. Das Schubelement 9 bildet die Oberseite des Hubbodens 6, d.h. das Schubelement 9 ist über oder auf dem Grundelement 8 angeordnet. Das Schubelement 9 erstreckt sich dabei vom linken Rand des Hubbodens 6 bzw. des Grundelements 8 bis zur Mitte des Lastkraftwagens 1. Hierdurch überdeckt das Schubelement 9 mit einem an der rechten Seite über das Grundelement 8 hinausragenden Abschnitt von 400 mm Breite einen Teil des links und rechts der Fahrzeugmitte insgesamt 800 mm breiten Rahmens 2.

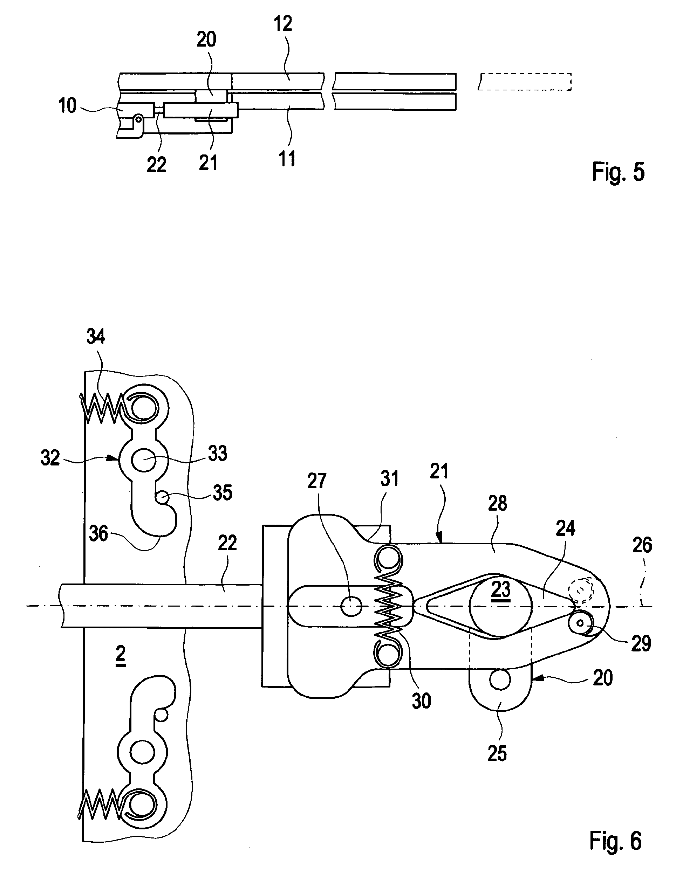

Das Schubelement 9 ist dabei quer zum Lastkraftwagen 1 verschiebbar ausgeführt. Hierzu ist ein hydraulischer Zylinder 10 vorgesehen, der bei Ein- und Ausfahren seines Stempels ein an dessen Ende angeordnetes und in der Figur nicht zu sehendes Fangmaul bewegt. Dieses Fangmaul kann an einem an der Unterseite des Schubelements 9 vorspringenden Riegelbolzen, der ebenfalls nicht zu sehen ist, angreifen und somit die Stempelbewegung auf das Schubelement 9 übertragen. Eine bevorzugte Ausführungsform von Fangmaul und Riegelbolzen wird weiter unten im Zusammenhang mit der Figur 5 näher beschrieben.

Entsprechend dem linken Hubboden 6 umfasst auch der rechte Hubboden 7 ein flächiges Grundelement 11 und ein quer zum Lastkraftwagen 1 verschiebbares Schubelement 12, das die Oberfläche des Hubbodens 7 bildet und dementsprechend oberhalb des Grundelements 11 angeordnet ist. Beide Grundelemente 8 und 11 haben die gleiche Breite von jeweils 800 mm, und beide Schubelemente 9 und 12 haben die gleiche Breite von jeweils 1200 mm. Im Unterschied zum Schubelement 9 befindet sich das Schubelement 12 in der in der Figur 2 dargestellten Situation in einer Stellung, in welcher ein linker Rand des Schubelements 12 mit einem linken Rand des Hubbodens 7 bzw. des Grundelements 11 bündig ist, während ein 400 mm breiter rechter Endabschnitt des Schubelements 12 über einen rechten Rand des Grundelements 11 hinausragt.

Da beide Schubelemente 9 und 12 quer zum Lastkraftwagen 1 verschiebbar sind, kann das Schubelement 9 von der in der Figur 2 gezeigten Stellung in eine Stellung überführt werden, die derjenigen entspricht, in welcher sich das Schubelement 12 in der Figur 2 befindet, d.h. das Schubelement 9 kann von der gezeigten Stellung in eine Stellung überführt werden, in welcher ein rechter Rand des Schubelements 9 mit einem rechten Rand des Hubbodens 6 bzw. des Grundelements 8 bündig ist und ein linker Endabschnitt von 400 mm Breite über den linken Rand des Grundelements 8 hervorragt. In dieser Stellung wird der in der Figur 2 vom Schubelement 9 überdeckte Teil des Rahmens 2 freigegeben und nicht mehr vom Schubelement 9 überdeckt. Entsprechend kann das Schubelement 12 von der in der Figur 2 gezeigten Stellung in eine Stellung überführt werden, die derjenigen entspricht, in welcher sich das Schubelement 9 in der Figur 2 befindet, d.h. das Schubelement 9 kann von der gezeigten Stellung in eine Stellung überführt werden, in welcher ein rechter Rand des Schubelements 12 mit einem rechten Rand des Hubbodens 7 bzw. des Grundelements 11 bündig ist und ein linker Endabschnitt von 400 mm Breite über den linken Rand des Grundelements 11 hervorragt. Dieser über den linken Rand des Grundelements 11 hervorragende linke Endabschnitt des Schubelements 12 überdeckt dann einen Teil des Rahmens 2, der in der Stellung des Schubelements 12, wie sie die Figur 2 zeigt, unbedeckt ist.

Beide Schubelemente 9 und 12 können dabei unabhängig voneinander verschoben werden. Beispielsweise können beide Schubelemente 9 und 12 in Stellungen verschoben werden, in welchen sie jeweilige Teile des Rahmens 2 gleichzeitig überdecken oder gleichzeitig freigeben, oder aber es kann das linke Schubelement 9 in die Stellung gebracht werden, in welcher es den Rahmen 2 nicht überdeckt, während sich das rechte Schubelement 12 zur selber Zeit in der Stellung befindet, in welcher es einen Teil des Rahmens 2 überdeckt. Um einen der Hubböden 6 oder 7 absenken zu können, muss sich allerdings dessen jeweiliges Schubelement 9 oder 12 in derjenigen Stellung befinden, in welcher es den Rahmen 2 nicht überdeckt sondern freigibt.

In den Figuren nicht zu sehende lösbare Kupplungseinrichtungen sorgen dafür, dass die Schubelemente 9 und 12 in den jeweiligen ein- oder ausgefahrenen Stellungen sicher und lösbar gehalten werden.

Die vorteilhafte Wirkung derart ausgestalteter Hubböden 6 und 7 wird anhand von in der Figur 2 auf den Schubelementen 9 und 12 dargestellten Paletten 13 ersichtlich. Diese Paletten 13 haben die gleiche Breite von 1200 mm wie die Schubelemente 9 und 12 und wurden bei abgesenkten Hubböden 6 und 7 auf den Schubelementen 9 und 12 abgesetzt. Nach Heben der Hubböden 6 und 7 in die erste Position, in welcher deren Oberseiten mit den Ladeflächen 4 und 5 im Wesentlichen in einer Ebene sind, müssen die Schubelemente 9 und 12 nur noch in diejenigen Stellungen verschoben werden, in welchen sie den Rahmen 2 teilweise überdecken, um die Paletten 13 in einen Ladebereich des Lastkraftwagens 1 zu befördern. Falls erforderlich, können die Paletten 13 von den Schubböden 9 und 12 auf vorbestimmte Abstellplätze auf den Ladeflächen 4 oder 5 befördert werden, was jedoch keines besonderen Aufwandes und insbesondere keiner Schwenkbewegung mehr bedarf.

In der Figur 3 ist beispielhaft ein Querschnitt durch den Hubboden 6 in Längsrichtung des Lastkraftwagens 1 dargestellt. Ein durch einen gepunkteten Kreis markierter Bereich ist in der Figur 4 als vergrößerter Detailausschnitt zu sehen. Man erkennt, dass das Grundelement 8 an einer dem Schubelement 9 zugewandten Seite drei parallel angeordnete nutförmige Hohlprofile oder Spurprofile 14 von grober Z-Form aufweist, in die der Schubboden 9 mit an seiner Unterseite vorgesehenen zylinderförmigen Tragrollen 15, bei denen es sich auch um Kugellager handeln kann, eingreift. Die Tragrollen 15 sind mit jeweiligen horizontalen Achsen 16 an einem Mittelsteg eines Z-Profilträgers 17 befestigt und rollen beim Verschieben des Schubbodens 9 auf dem Spurprofil 14 ab. Ein der Tragrolle 15 abgewandter Endabschitt 18 des Z-Profilträgers 17 greift dabei in eine Hinterschneidung 19 des Spurprofils 14 ein. Somit dienen die Spurprofile 14 nicht nur als Träger und Spür für die Tragrollen 15, sondern wirken durch die als Führungsnut dienende Hinterschneidung 19 auch als Rückhaltung.

Beide Schubelemente 9 und 12 sind von den jeweiligen Grundelementen 8 und 11 lösbar und können bedarfsweise von den jeweiligen Hubböden 6 und 7 abgenommen werden. Wird ein Schubelement 9 oder 12 abgenommen, so umfasst der betreffende Hubboden 8 oder 11 nunmehr lediglich das jeweilige Grundelement 8 oder 11, dessen Oberfläche jetzt die Oberfläche des jeweiligen Hubbodens 8 oder 11 darstellt. Um diese Oberfläche auf das Niveau der Ladeflächen 4 und 5 bringen zu können, ist es möglich, die Hubböden 6 und 7 entsprechend in eine dritte Position anzuheben. Wenn in der dritten Position die Oberflächen eines der Grundelemente 8 und 11 und die Ladeflächen 4 und 5 im Wesentlichen in einer Ebene liegen, ist das betreffende Grundelement 8 oder 11 höher positioniert als wenn sich der betreffende Hubboden 6 oder 7 in der ersten Position befindet.

Um eine ebene Oberfläche der Grundelemente 8 oder 11 bei abgenommenen Schubelementen 9, 12 zu gewährleisten, werden die Spurprofile 14 mit Abdeckleisten oder ähnlichen Abdeckelementen abgedeckt. Darüber hinaus sind Abdeckmittel zum Abdecken desjenigen Teils des Rahmens 2 vorgesehen, der von den Schubelementen 9, 12 abgedeckt wird, wenn sich diese in der ersten Stellung befinden.

Figur 5 zeigt eine vergrößerte Detailansicht des Grundelements 11 und des Schubbodens 12, in welcher der oben bereits erwähnte und sich an einer unteren Seite des Schubbodens 12 befindliche Riegelbolzen 20 zu sehen ist. Der Riegelbolzen 20 ist in der Figur 5 vom ebenfalls bereits erwähnten Fangmaul 21 umgriffen, welches sich an einem Ende des Stempels 22 des Zylinders 10 befindet. Riegelbolzen 20 und Fangmaul 21 sind in der Figur 6 noch einmal vergrößert dargestellt.

Der Riegelbolzen 20 umfasst einen runden zylinderartigen Mittelkörper 23. An zwei diametral entgegengesetzten Seiten des Mittelkörpers 23 liegt jeweils ein im Wesentlichen dreieckiger Teilkörper 24 am Mittelkörper 23 an. Ein plattenförmiges Element 25 steht an einem der Unterseite des Schubbodens 12 zugewandten Endabschnitt des Mittelkörpers 23 von diesem ab. Dabei bilden eine Längsachse des plattenförmigen Elements 25 und eine in der Blattebene liegende Mittelachse durch den Mittelkörper 23 sowie die beiden dreieckigen Teilkörper 24 einen rechten Winkel. Wie im Folgenden noch zu sehen sein wird, ist der Riegelbolzen 21 um eine senkrecht auf der Blattebene stehende Zentralachse des Mittelkörpers 23 drehbar gelagert. In der in der Figur 6 gezeigten Situation, in der das Fangmaul 21 den Riegelbolzen 20 umgreift, fallen die durch den Mittelkörper 23 und die beiden dreieckigen Teilkörper 24 verlaufende Mittelachse sowie eine Längsachse 26 des Fangmauls 21 zusammen.

Das am Stempel 22 des Zylinders 10 angeordnete Fangmaul 21 weist zwei zangenartig um eine Schwenkachse 27 angelenkte Greifklauen 28 auf. Wie in der Figur 6 zu sehen ist, sind die Greifklauen 28 auf einer dem Stempel 22 abgewandten Seite aufeinander zulaufend ausgebildet, wobei sich ein vorderer Endabschnitt jeder der Greifklauen 28 um die in der Figur 6 rechte Spitze des rechten der beiden Teilkörper 24 biegt. Um die jeweils andere Greifklaue 28 nicht zu behindern, weist jede der beiden Greifklauen 28 an diesem vorderen Endabschnitt eine entsprechende Ausnehmung auf. Am äußersten Ende des vorderen Endabschnitts sind Rollen 29 an den Greifklauen 28 befestigt. Eine zwischen der Schwenkachse 27 und dem von den Greifklauen 28 umgriffenen Riegelbolzen 20 vorgesehene Spiralfeder 30, deren jeweilige Enden an jeweiligen Befestigungselementen beider Greifklauen 28 eingehakt ist, übt auf die Greifklauen 28 eine Schließkraft auf, die zum Öffnen der Greifklauen 28 überwunden werden muss. Auf ungefährer Höhe der Schwenkachse 27 weist die Außenkontur des Fangmauls 21 beidseitig der und symmetrisch zur Längsachse 26 des Fangmauls 21 gebogene Abschnitte 31 auf, in denen sich die Breite des Fangmauls 21 zum Stempel 22 hin kontinuierlich vergrößert, wodurch ein verbreiterter Endabschnitt gebildet wird.

Am Rahmen 2 sind symmetrisch zur Längsachse 26 des Fangmauls 21 Hebelelemente 32 nach Art eines zweiseitigen Hebels um jeweilige Hebelachsen 33 drehbar gelagert. An dem Fangmaul 21 abgewandten Hebelarmen der Hebelelemente 32 greifen jeweilige Zugfedern 34 an den Hebelelementen 32 an. Die Zugfedern 34 üben jeweilige zur Längsachse 26 parallele und vom Riegelbolzen 20 weggerichtete Zugkräfte auf die Hebelelemente 32 aus. Infolge dieser Zugkräfte werden dem Fangmaul 21 zugewandte Hebelarme der Hebelelemente 32 gegen jeweilige am Rahmen 2 befestigte Anschlagstifte 35 gedrückt. Die dem Fangmaul 21 zugewandten Hebelarme der Hebelelemente weisen jeweilige zum Riegelbolzen 20 hin gebogene Endabschnitte 36 auf, welche die Anschlagstifte 35 teilweise umfangen. Dabei weisen jeweilige den Anschlagstiften 35 abgewandte Seiten der Endabschnitte 36 eine Außenkontur auf, die im Wesentlichen den gebogenen Abschnitten 31 der Außenkontur des Fangmauls 21 jeweils entsprechen. Die lichte Weite zwischen den Endabschnitten 36 der Hebelelemente 32 ist dabei geringfügig kleiner als die Breite des Fangmauls 21 an dessen hinterem verbreitertem Endabschnitt.

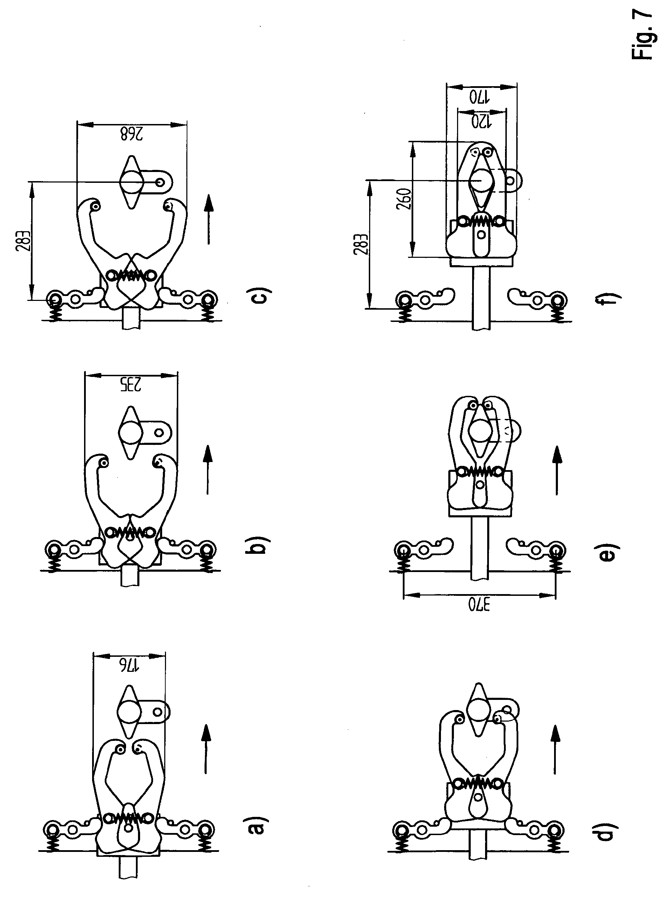

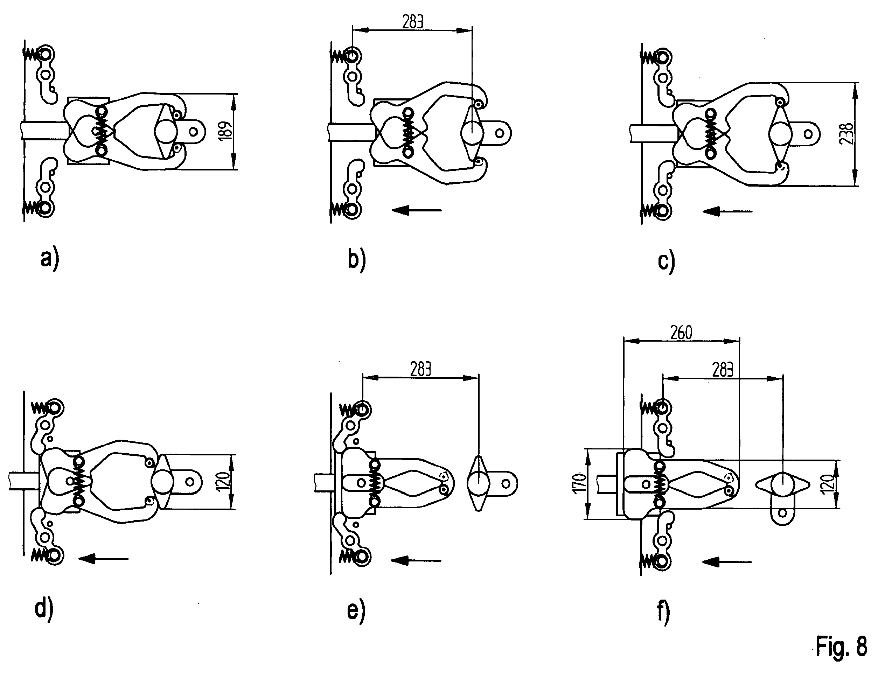

In den folgenden Figuren 7 und 8 wird das Zusammenspiel zwischen Fangmaul 21 und Riegelbolzen 20 beim Greifen des Riegelbolzens 20 durch das Fangmaul 21 sowie beim Freigeben desselben vom Fangmaul 21 erläutert.

Figur 7a) zeigt eine Situation, in welcher sich der Schubboden 12 in der ersten Stellung befindet, der Stempel 22 des Zylinders 10 auszufahren beginnt und das Fangmaul 21, das sich in seiner Ruheposition, in der es den Riegelbolzen 20 nicht umgreift und in der sich der verbreiterte Endabschnitt des Fangmauls 21 vom Riegelbolzen 20 aus gesehen jenseits der Hebelelemte 32 befindet, vom Stempel 22 auf den Riegelbolzen 20 zu bewegt wird und gerade dazu ansetzt, diesen zu umgreifen. Ein Pfeil zeigt die Bewegungsrichtung des Fangmauls 21 an. Da die lichte Weite zwischen den Hebelelementen 32 kleiner ist als die Breite des Fangmauls 21 im hinteren Endabschnitt drücken die gegen die Anschlagstifte 35 stoßenden Hebelelemente 32 bei weiterem Bewegen des Fangmauls 21 in Richtung auf den Riegelbolzen 20 mit ihren Endabschnitten 36 jeweils gegen die gebogenen Abschnitte 31 des Fangmauls, wodurch sie eine Kraft auf die Greifklauen 28 ausüben, die derjenigen von der Spiralfeder 30 entgegengesetzt ist. Infolgedessen beginnen sich die Greifklauen 28 des Fangmauls 21 zu öffnen. Je mehr sich das Fangmaul 21 dem Riegelbolzen 20 nähert, umso mehr öffnen sich die Greifklauen 28, weil die Breite des Fangmauls 21 entlang der gebogenen Abschnitte 31 zunimmt, die lichte Weite zwischen den Hebelelementen 32 jedoch gleich bleibt und die Hebelelemente 32 gegen die Anschlagstifte 35 gedrückt werden, wie in Figur 7b) zu sehen ist. In der Figur 7c) sind die Greifklauen 28 kurz davor, ihre größte Öffnung zu erreichen. Nachdem die gebogenen Abschnitte 31 die Hebelelemente 32 passiert haben, dominiert wieder die Kraft der Spiralfeder 30 und die Greifklauen 28 beginnen sich wieder zu schließen. Zu diesem Zeitpunkt hat sich das Fangmaul 21 aber dem Riegelbolzen 20 so weit genähert, dass die Rollen 29 des Fangmauls 21 auf der Höhe des Mittelkörpers 23 des Riegelbolzens 20 sind. Dies ist in Figur 7d) zu sehen. Beim Zuschnappen der Greifklauen 28 kommen die Rollen 29 daher in Kontakt mit dem Riegelbolzen 20. Sie rollen auf dessen Außenseiten und insbesondere auf den Flächen des sich in der Figur 7d) nach rechts verjüngenden rechten dreieckigen Teilkörpers 24 ab, während das Fangmaul seine Bewegungsrichtung beibehält. In der Figur 7e) haben die Rollen 29 die rechte äußerste Spitze des rechten dreieckigen Teilkörpers 24 erreicht, und in der Figur 7f) hat das Fangmaul 21 den Riegelbolzen 20 endgültig gegriffen. Die Situation der Figur 7f) entspricht somit der Situation in der Figur 6. Nun kann der Schubboden 12 durch weiteres Ausfahren des Stempels 22 beliebig nach rechts verschoben werden. Da das Fangmaul 21 den Riegelbolzen 20 insbesondere mit den vorderen Endabschnitten, an denen die Rollen 29 angeordnet sind, umgriffen hält, kann der Schubboden anschließend auch wieder nach links bis zu der in den Figuren 7f) bzw. 6 gezeigten Position verschoben werden. Insbesondere kann der Schubboden 12 durch entsprechendes Ein- und Ausfahren des Stempels 22 zwischen der ersten und der zweiten Stellung beliebig hin- und her bewegt werden. In der ersten und der zweiten Stellung ist der Schubboden 12 zudem vom Fangmaul 21 gehalten. Somit erfüllt die aus Zylinder 10, Stempel 22 und Fangmaul 21 bestehende Verschiebeeinrichtung zudem die Funktion einer lösbaren Kupplungseinrichtung.

Um das Fangmaul 21 vom Riegelbolzen 20 wieder zu lösen, wird der Schubboden 12 in die erste Stellung gebracht. In dieser wird der um die Mittelachse des Mittelkörpers 23 drehbare Riegelbolzen 20 um 90° gedreht. Infolgedessen fällt die in der Blattebene liegende Mittelachse durch den Mittelkörper 23 sowie die beiden dreieckigen Teilkörper 24 nicht mehr mit der Längsachse 26 des Fangmauls 21 zusammen, sondern steht zu dieser senkrecht, wodurch die Greifklauen 28 durch die dreieckigen Teilkörper 24 auseinandergedrückt werden. Hierdurch wird insbesondere der Umgriff des Riegelbolzens 20 durch die vorderen Endabschnitte des Fangmauls 21 gelöst, was in der Figur 8a) gesehen werden kann. Jetzt kann das Fangmaul 21 vom sich in der Figur 8a) nach links bewegenden Stempel 22, was in den folgenden Figuren durch einen Pfeil angezeigt wird, vom Riegelbolzen 20 weggezogen werden. Dabei rollen die Rollen 29 auf den Außenflächen der dreieckigen Teilkörper 24 ab. Die Greifklauen 28 öffnen sich währenddessen immer mehr, bis die Rollen 29 die Spitzen der dreieckigen Teilkörper 24 erreicht haben. Dies zeigen die Figuren 8b) und 8c). In der Figur 8d) haben die Rollen 29 die Spitzen der dreieckigen Teilkörper 24 überschritten. Infolge der Spiralfeder 30 beginnen sich die Greifklauen 28 wieder zu schließen. Mit dem hinteren Ende stößt das Fangmaul 21 jetzt an den Hebelelementen 32 an und beginnt beim weiteren Bewegen nach links gegen diese zu drücken. Weil die um die Schwenkachsen 33 drehbaren Hebelelemente 32 nunmehr von den Anschlagstiften 35 weggedrückt werden, können sie diesem Druck nachgeben. Sie verschwenken daher um die Hebelachsen 33, wobei sie die Zugfedern 34 spannen. Schließlich schließen sich die Greifklauen 28 ganz. Dies zeigt die Figur 8e). Die Hebelelemente 32 werden so lange verschwenkt, bis der hintere breite Endabschnitt des Fangmauls 21 die Hebelelemente 32 passiert hat. Nach Passieren des breiten Endabschnittes verschwenken die gespannten Zugfedern 34 die Hebelelemente 32 wieder in die entgegengesetzte Richtung, bis sie an den Anschlagstiften 35 anschlagen. Der Riegelbolzen wird gemäß Figur 8f) wieder um 90° gedreht. Damit ist die ursprüngliche Situation wieder erreicht.

## Patentansprüche

1. Fahrbares Transportmittel (1) mit wenigstens einer horizontalen Ladefläche (4, 5), einem die Ladefläche (4, 5) unterstützenden Rahmen (2) und wenigstens einem Hubboden (6, 7), der zwischen einer ersten Position, in welcher eine Oberseite des Hubbodens (6, 7) und die Ladefläche (4, 5) in einer Ebene angeordnet sind und wenigstens einer zweiten Position, in welcher der Hubboden (6, 7) gegenüber der Ladefläche (4, 5) abgesenkt ist, bewegbar ist, wobei der Hubboden (6, 7) ein die Oberseite des Hubbodens (6, 7) bildendes Schubelement (9, 12) umfasst, das in der ersten Position des Hubbodens (6, 7) parallel zur Ladefläche (4, 5) zwischen einer ersten Stellung, in welcher das Schubelement (9, 12) einen Teil des Rahmens (2) überdeckt und einer zweiten Stellung, in welcher das Schubelement (9, 12) den in der ersten Stellung überdeckten Teil des Rahmens (2) freigibt, verschiebbar ist, **dadurch gekennzeichnet dass**
der Hubboden (6, 7) ein das Schubelement (9, 12) unterstützendes flächiges Grundelement (8, 11) umfasst.

2. Fahrbares Transportmittel (1) nach Anspruch 1, bei dem der Hubboden (6, 7) wenigstens ein nutförmiges Hohlprofil (14) aufweist und das Schubelement (9, 12) in das Hohlprofil (14) eingreift.

3. Fahrbares Transportmittel nach Anspruch 1 oder 2, bei dem der Hubboden unterhalb des Schubelements wenigstens eine Schiene aufweist, auf der sich das Schubelement beim Verschieben bewegt.

4. Fahrbares Transportmittel (1) nach einem der Ansprüche 2 oder 3, bei dem das Schubelement (9, 12) wenigstens ein Rollenelement (15) umfasst und das Hohlprofil (14) oder die Schiene wenigstens eine Mulde aufweist, die das Rollenelement (15) aufnimmt, wenn sich das Schubelement (9, 12) in der ersten und/oder der zweiten Stellung befindet.

5. Fahrbares Transportmittel (1) nach einem der vorliegenden Ansprüche, bei dem das Schubelement (9, 12) vom Hubboden (6, 7) abnehmbar ist.

6. Fahrbares Transportmittel (1) nach Anspruch 5, bei dem ein Abdeckmittel zum Abdecken des in der ersten Stellung des Schubelements (9, 12) abgedeckten Teils des Rahmens nach Abnehmen des Schubelements (9, 12) vorgesehen ist.

7. Fahrbares Transportmittel (1) nach einem der vorhergehenden Ansprüche mit einer ersten Kupplungseinrichtung zum lösbaren Halten des Schubelements (9, 12) in der ersten Stellung und/oder einer zweiten Kupplungseinrichtung zum lösbaren Halten des Schubelements (9, 12) in der zweiten Stellung.

8. Fahrbares Transportmittel (1) nach einem der vorhergehenden Ansprüche mit einer Verschiebeeinrichtung (10, 21, 22) zum Verschieben des Schubelements (9, 12), wobei das Schubelement (9, 12) ein Halteelement (20) aufweist, an welchem die Verschiebeeinrichtung (10, 21, 22) beim Verschieben des Schubelements (9, 12) angreift.

9. Fahrbares Transportmittel (1) nach einem der vorhergehenden Ansprüche, bei dem ein Außenrand des Hubbodens (6, 7) mit einem äußeren Rand der Ladefläche (4, 5) bündig ist, wenn sich das Schubelement (9, 12) in der ersten Stellung befindet.

10. Fahrbares Transportmittel (1) nach einem der vorhergehenden Ansprüche, bei dem der Hubboden (6, 7) an einer Seite des Transportmittels (1) angeordnet ist, wobei ein weiterer Hubboden (6, 7) an einer entgegengesetzten Seite des Transport-mittels (1) vorgesehen ist.

11. Fahrbares Transportmittel (1) nach einem der vorhergehenden Ansprüche, das ein Kraftfahrzeug oder ein Lastkraftwagen oder ein Anhänger oder ein Schienenfahrzeug oder ein Waggon ist.

## Claims

1. Mobile transportation means (1) having at least one horizontal loading surface (4, 5), having a frame (2) which supports the loading surface (4, 5), and having at least one lifting floor (6, 7) which is movable between a first position, in which a top side of the lifting floor (6, 7) and the loading surface (4, 5) are arranged in a plane, and at least one second position, in which the lifting floor (6, 7) is lowered in relation to the loading surface (4, 5), wherein the lifting floor (6, 7) comprises a sliding element (9, 12) which forms the top side of the lifting floor (6, 7) and which, when the lifting floor (6, 7) is in the first position, is displaceable parallel to the loading surface (4, 5) between a first position, in which the sliding element (9, 12) overlaps a part of the frame (2), and a second position, in which the sliding element (9, 12) exposes that part of the frame (2) which is overlapped in the first position,
**characterized in that**
the lifting floor (6, 7) comprises a planar base element (8, 11) which supports the sliding element (9, 12).

2. Mobile transportation means (1) according to Claim 1, in which the lifting floor (6, 7) has at least one groove-shaped hollow profile (14) and the sliding element (9, 12) engages into the hollow profile (14).

3. Mobile transportation means according to Claim 1 or 2, in which the lifting floor has, below the sliding element, at least one rail on which the sliding element moves during a displacement.

4. Mobile transportation means (1) according to either of Claims 2 and 3, in which the sliding element (9, 12) comprises at least one roller element (15), and the hollow profile (14) or the rail has at least one depression which receives the roller element (15) when the sliding element (9, 12) is situated in the first and/or the second position.

5. Mobile transportation means (1) according to one of the preceding claims, in which the sliding element (9, 12) can be removed from the lifting floor (6, 7).

6. Mobile transportation means (1) according to Claim 5, in which a covering means is provided for covering, after the removal of the sliding element (9, 12), that part of the frame which is covered in the first position of the sliding element (9, 12).

7. Mobile transportation means (1) according to one of the preceding claims, having a first coupling device for releasably holding the sliding element (9, 12) in the first position and/or having a second coupling device for releasably holding the sliding element (9, 12) in the second position.

8. Mobile transportation means (1) according to one of the preceding claims, having a displacement device (10, 21, 22) for displacing the sliding element (9, 12), wherein the sliding element (9, 12) has a retention element (20) on which the displacement device (10, 21, 22) engages during the displacement of the sliding element (9, 12).

9. Mobile transportation means (1) according to one of the preceding claims, in which an outer edge of the lifting floor (6, 7) is flush with an outer edge of the loading surface (4, 5) when the sliding element (9, 12) is situated in the first position.

10. Mobile transportation means (1) according to one of the preceding claims, in which the lifting floor (6, 7) is arranged on one side of the transportation means (1), wherein a further lifting floor (6, 7) is provided on an opposite side of the transportation means (1).

11. Mobile transportation means (1) according to one of the preceding claims, which is a motor vehicle or a truck or a trailer or a rail vehicle or a wagon.

## Revendications

1. Moyen de transport mobile (1) comportant au moins un plateau de chargement (4, 5), un châssis (2) supportant le plateau de chargement (4, 5) et au moins une plate-forme de levage (6, 7), qui est mobile entre une première position, dans laquelle un côté supérieur de la plate-forme de levage (6, 7) et le plateau de chargement (4, 5) sont disposés dans un plan et au moins une deuxième position, dans laquelle la plate-forme de levage (6, 7) est abaissée par rapport au plateau de chargement (4, 5), dans lequel la plate-forme de levage (6, 7) comprend un élément de poussée (9, 12) formant le côté supérieur de la plate-forme de levage (6, 7), qui dans la première position de la plate-forme de levage (6, 7) est déplaçable parallèlement au plateau de chargement (4, 5) entre une première position, dans laquelle l'élément de poussée (9, 12) recouvre une partie du châssis (2) et une deuxième position, dans laquelle l'élément de poussée (9, 12) libère la partie du châssis (2) recouverte dans la première position, **caractérisé en ce que** la plate-forme de levage (6, 7) comprend un élément de base plat (8, 11) soutenant l'élément de poussée (9, 12).

2. Moyen de transport mobile (1) selon la revendication 1, dans lequel la plate-forme de levage (6, 7) présente au moins un profilé creux en forme de rainure (14) et l'élément de poussée (9, 12) s'engage dans le profilé creux (14).

3. Moyen de transport mobile selon la revendication 1 ou 2, dans lequel la plate-forme de levage présente en dessous de l'élément de poussée au moins un rail, sur lequel l'élément de poussée se meut lors du déplacement.

4. Moyen de transport mobile (1) selon une des revendications 2 ou 3, dans lequel l'élément de poussée (9, 12) comprend au moins un élément de roulement (15) et le profilé creux (14) ou le rail présente au moins un godet, qui contient l'élément de roulement (15) lorsque l'élément de poussée (9, 12) se trouve dans la première et/ou la deuxième position.

5. Moyen de transport mobile (1) selon l'une quelconque des revendications précédentes, dans lequel l'élément de poussée (9, 12) peut être enlevé de la plate-forme de levage (6, 7).

6. Moyen de transport mobile (1) selon la revendication 5, dans lequel il est prévu un moyen de couverture destiné à recouvrir la partie du châssis recouverte dans la première position de l'élément de poussée (9, 12) après l'enlèvement de l'élément de poussée (9, 12).

7. Moyen de transport mobile (1) selon l'une quelconque des revendications précédentes avec un premier dispositif d'embrayage destiné à maintenir de façon séparable l'élément de poussée (9, 12) dans la première position et/ou un deuxième dispositif d'embrayage destiné à maintenir de façon séparable l'élément de poussée (9, 12) dans la deuxième position.

8. Moyen de transport mobile (1) selon l'une quelconque des revendications précédentes, avec un dispositif de déplacement (10, 21, 22) pour déplacer l'élément de poussée (9, 12), dans lequel l'élément de poussée (9, 12) présente un élément d'accrochage (20), sur lequel le dispositif de déplacement (10, 21, 22) agit lors du déplacement de l'élément de poussée (9, 12).

9. Moyen de transport mobile (1) selon l'une quelconque des revendications précédentes, dans lequel un bord extérieur de la plate-forme de levage (6, 7) est à fleur d'un bord extérieur du plateau de chargement (4, 5), lorsque l'élément de poussée (9, 12) se trouve dans la première position.

10. Moyen de transport mobile (1) selon l'une quelconque des revendications précédentes, dans lequel la plate-forme de levage (6, 7) est disposée sur un côté du moyen de transport (1), dans lequel il est prévu une autre plate-forme de levage (6, 7) sur un côté opposé du moyen de transport (1).

11. Moyen de transport mobile (1) selon l'une quelconque des revendications précédentes, qui est un véhicule automobile ou un camion ou une remorque ou un véhicule ferroviaire ou un wagon.
